Europäisches Patentamt

European Patent Office

Office européen des brevets

(11) Veröffentlichungsnummer: **0 437 752 A1**

# (12) EUROPÄISCHE PATENTANMELDUNG

(21) Anmeldenummer: 90124334.5

(22) Anmeldetag: 15.12.90

(51) Int. Cl.⁵: **B60T 8/50**, B60T 8/42

(30) Priorität: 16.01.90 DE 4001016

(43) Veröffentlichungstag der Anmeldung:
24.07.91 Patentblatt 91/30

(84) Benannte Vertragsstaaten:
**DE FR GB IT**

(71) Anmelder: **ROBERT BOSCH GmbH**
**Postfach 10 60 50**
**W-7000 Stuttgart 10(DE)**

(72) Erfinder: **Lauer, Rainer, Dipl.-Ing.**
**Hofstattstrasse 1**
**W-7015 Münchingen(DE)**
Erfinder: **Willmann, Karl-Heinz, Dipl.-Ing.**
**Arndtstrasse 45**
**W-7149 Freiberg/Neckar(DE)**

(54) **Hydraulische Bremsanlage für Fahrzeuge, insbesondere Kraftfahrzeuge.**

(57) Die Bremsanlage (10) hat einen Hauptbremszylinder (12) zum Erzeugen von Bremsdruck in den beiden Radbremsen (18 und 19) eines Bremskreises (I). In einer beiden Radbremsen (18 und 19) gemeinsamen Hauptbremsleitung (14) liegt ein erstes 2/2-Wegeventil (20), welches bei einer vom Fahrer ausgelösten Bremsung durchlässig ist. In parallelverlaufenden Radbremsleitungen (25 und 26) befindet sich je ein zweites 2/2-Wegeventil (27 bzw. 28). Die Drosselwirkung aufweisenden Wegeventile (27 und 28) werden von einem Steuergerät (52) einer Einrichtung (51) zum Verhindern des Radblockierens in Durchlaßstellung und das Wegeventil (20) in der Hauptbremsleitung (14) in Sperrstellung geschaltet, wenn die Gefahr des Blockierens eines Fahrzeugrades gegeben ist.

Die Einrichtung (51) hat einen geringen Aufwand an 2/2-Wegeventilen und bewirkt einen verlangsamten Druckanstieg in den Radbremsen (18, 19) beim Blockierschutzbetrieb.

EP 0 437 752 A1

## HYDRAULISCHE BREMSANLAGE FÜR FAHRZEUGE, INSBESONDERE KRAFTFAHRZEUGE

Stand der Technik

Die Erfindung geht aus von einer hydraulischen Bremsanlage für Fahrzeuge, insbesondere Kraftfahrzeuge, nach der Gattung des Hauptanspruchs.

Es ist schon eine solche Bremsanlage bekannt (Bosch Technische Berichte, Band 7 (1980) Heft 2, Seite 77, Bild 16C), bei der jeder Radbremse des Bremskreises zwei in parallelen Bremsleitungen liegende 2/2-Wegeventile zugeordnet sind, von denen das eine Wegeventil eine Schaltstellung mit Drosselwirkung hat. Dieses Wegeventil ist hydraulisch schaltbar, z. B. durch den Differenzdruck von Hauptbremszylinder und Radbremszylinder der zugeordneten Radbremse. Mit dieser bekannten Drucksteuerventilanordnung lassen sich beim Blokkierschutzbetrieb Bremsdruckverläufe mit langsamem Druckaufbau erzielen, welche den Erfordernissen der Bremsregelung sowie der Geräuschentwicklung gerecht werden. Nachteilig bei dieser Bremsanlage ist jedoch der große Bedarf an kostenaufwendigen Wegeventilen.

Vorteile der Erfindung

Die erfindungsgemäße Bremsanlage mit den kennzeichnenden Merkmalen des Hauptanspruchs hat demgegenüber den Vorteil, daß der Aufwand an Wegeventilen und Leitungen verringert ist. Trotzdem lassen sich bei der Bremsanlage die regelungstechnischen Anforderungen hinsichtlich verlangsamter Druckanstieg im Blockierschutzbetrieb und Geräuschverhalten erfüllen. Eine Komfortminderung des mit der erfindungsgemäßen Bremsanlage ausgestatteten Fahrzeugs ist hierdurch vermieden.

Durch die in den Unteransprüchen aufgeführten Maßnahmen sind vorteilhafte Weiterbildungen und Verbesserungen der im Hauptanspruch angegebenen Bremsanlage möglich.

Zeichnung

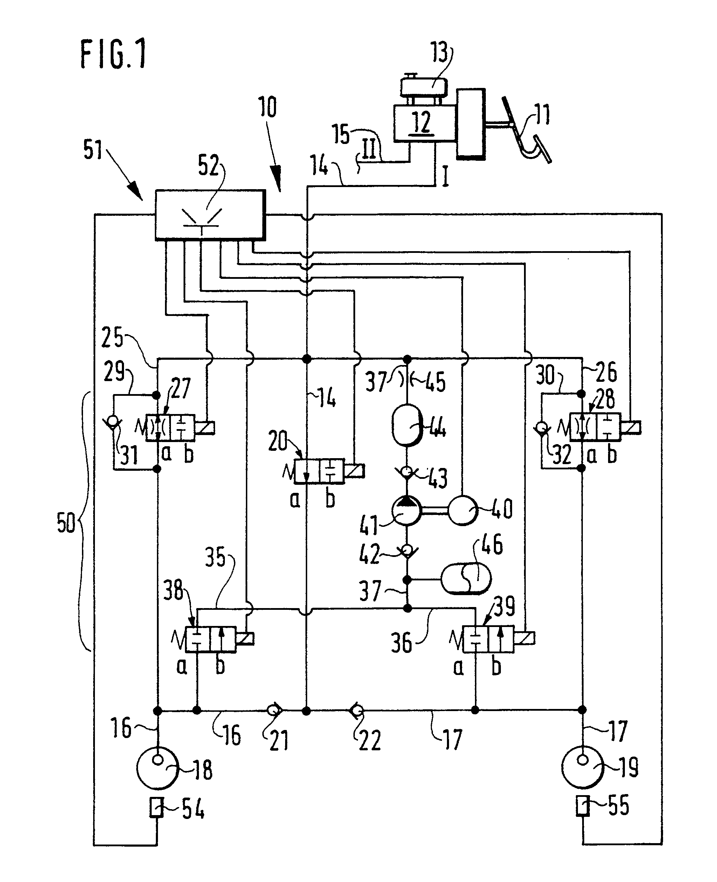

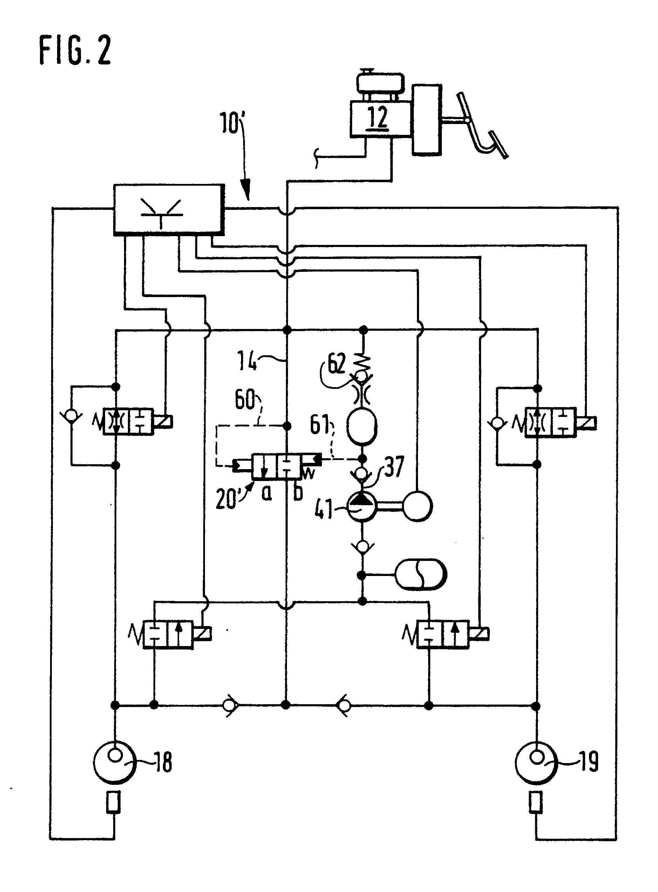

Zwei Ausführungsbeispiele der Erfindung sind in der Zeichnung vereinfacht dargestellt und in der nachfolgenden Beschreibung näher erläutert. Es zeigen Figur 1 ein Schaltschema eines ersten Ausführungsbeispieles einer hydraulischen Bremsanlage mit einem elektromagnetisch betätigbaren 2/2-Wegeventil in einer Bremsleitung zum Einsteuern von Bremsdruck in zwei Radbremsen und Figur 2 ein Schema eines zweiten Ausführungsbeispiels einer entsprechend Figur 1 geschalteten Bremsanlage mit einem hydraulisch betätigbaren 2/2-Wegeventil in der Bremsleitung.

Beschreibung der Ausführungsbeispiele

Das in Figur 1 dargestellte Schaltschema zeigt als erstes Ausführungsbeispiel eine hydraulische Bremsanlage 10 für Fahrzeuge, insbesondere für Kraftfahrzeuge. Die Bremsanlage 10 hat einen durch ein Bremspedal 11 betätigbaren Hauptbremszylinder 12 mit einem Vorratsbehälter 13 für ein Druckmittel. Vom Hauptbremszylinder 12 gehen eine erste Hauptbremsleitung 14 eines Bremskreises I sowie eine zweite Hauptbremsleitung 15 eines Bremskreises II aus. Die Hauptbremsleitung 14 des nachfolgend ausführlich beschriebenen Bremskreises I führt unter Verzweigung in zwei Leitungszweige 16 und 17 zu Radbremsen 18 und 19 nicht dargestellter Fahrzeugräder. In der Hauptbremsleitung 14 liegt ein erstes 2/2-Wegeventil 20, welches in seiner federbetätigbaren Stellung a den Durchlaß von Druckmittel vom Hauptbremszylinder 12 zu den Radbremsen 18 und 19 zuläßt, während in der elektromagnetisch schaltbaren Stellung b der Durchfluß gesperrt ist. In jedem Leitungszweig 16 bzw. 17 der Hauptbremsleitung 14 liegt ein den Druckmittelrückfluß durch die Hauptbremsleitung zurück zum Hauptbremszylinder 12 unterbindendes Rückschlagventil 21 bzw. 22.

Außerdem weist die Bremsanlage 10 je eine der jeweiligen Radbremse 18 bzw. 19 zugeordnete Radbremsleitung 25 bzw. 26 auf. Die Radbremsleitungen 25 und 26 Zweigen zwischen dem Hauptbremszylinder 12 und dem ersten 2/2-Wegeventil 20 von der Hauptbremsleitung 14 ab und treffen zwischen dem jeweiligen Rückschlagventil 21 bzw. 22 und der zugeordneten Radbremse 18 bzw. 19 auf den entsprechenden Leitungszweig 16 bzw. 17 der Hauptbremsleitung. Wie das Schaltschema deutlich zeigt, liegen zu den beiden, den zwei Radbremsen 18 und 19 des Bremskreises I zugeordneten Radbremsleitungen 25 und 26 der das erste 2/2-Wegeventil 20 aufweisende Abschnitt der Hauptbremsleitung 14 sowie die jeweiligen Leitungszweige 16 und 17 mit dem Rückschlagventil 21 bzw. 22 parallel. In jeder der beiden Radbremsleitungen 25 und 26 ist je ein zweites (bezogen auf die Zuordnung zur jeweiligen Radbremse 18 bzw. 19) 2/2-Wegeventil 27 bzw. 28 angeordnet. Dieses hat eine federbetätigbare Durchlaßstellung a mit Drosselwirkung sowie eine elektromagnetisch schaltbare Sperrstellung b. Außerdem ist an jeder Radbremsleitung 25 bzw. 26 je eine das in dieser angeordnete 2/2-Wegeventil 27 bzw. 28 überbrükkende Bypass-Leitung 29 bzw. 30 angeschlossen, in der ein den Druckmittelrückfluß von der entsprechenden Radbremse 18 bzw. 19 zum Hauptbremszylinder 12 zulassendes Rückschlagventil 31 bzw.

32 liegt.

Zwischen der Radbremse 18 bzw. 19 und dem zugeordneten Rückschlagventil 21 bzw. 22 gehen von dem jeweiligen Leitungszweig 16 bzw. 17 der Hauptbremsleitung 14 Leitungszweige 35 und 36 aus, welche in eine Rückförderleitung 37 münden. Diese hat mittelbaren Anschluß an den zwischen dem Hauptbremszylinder 12 und dem ersten 2/2-Wegeventil 20 verlaufenden Abschnitt der Hauptbremsleitung 14. In jedem Leitungszweig 35 bzw. 36 liegt ein drittes (wieder bezogen auf die Druckmittelversorgung der jeweiligen Radbremse 18 bzw. 19) 2/2-Wegeventil 38 bzw. 39. Dieses hat eine federbetätigbare Sperrstellung a und eine elektromagnetisch erzeugbare Durchlaßstellung b. In der Rückförderleitung 37 ist eine durch einen elektrischen Antriebsmotor 40 antreibbare Rückförderpumpe 41 für die Druckmittelförderung von den Radbremsen 18 und 19 zum Hauptbremszylinder 12 angeordnet. In der Rückförderleitung 37 befindet sich saugseitig der Pumpe ein Rückschlagventil 42. Ebenso ist druckseitig der Pumpe 41 ein weiteres Rückschlagventil 43 geschaltet. In Förderrichtung gesehen folgt auf das Rückschlagventil 43 in der Rückförderleitung 37 eine Dämpfungskammer 44 sowie eine Drossel 45. Außerdem ist zwischen dem Anschluß der beiden Leitungszweige 35 und 36 an die Rückförderleitung 37 und dem saugseitigen Rückschlagventil 42 ein Druckmittelauffangspeicher 46 angeschlossen.

Die Wegeventile 20, 27, 28, 38 und 39 bilden im Zusammenwirken mit den Rückschlagventilen 21, 22, 31 und 32 eine Drucksteuerventil-Anordnung 50 für Druckabbau, Druckhalten und Druckaufbau in den Radbremsen 18 und 19 des Bremskreises I beim Blockierschutzbetrieb einer Einrichtung 51 zum Verhindern des Blockierens der Fahrzeugräder beim Bremsen. In entsprechender Weise kann der Bremskreis II der Bremsanlage 10 ausgestattet sein. Die Einrichtung 51 ist außerdem mit einem elektronischen Steuergerät 52 zum Schalten der Wegeventile 20, 27, 28, 38 und 39 sowie des Antriebsmotors 40 der Rückförderpumpe 41 entsprechend den Erfordernissen des Blockierschutzbetriebes ausgestattet. An das Steuergerät 52 sind Radsensoren 53 und 54 zum Überwachen des Drehverhaltens der den Radbremsen 18 und 19 zugehörigen Fahrzeugräder angeschlossen.

Die Bremsanlage 10 hat folgende Funktion:
Bei einer vom Fahrer des Fahrzeugs durch Tritt auf das Bremspedal 11 ausgelösten Bremsung wird Druckmittel aus dem Hauptbremszylinder 12 ausgestoßen und über die Hauptbremsleitung 14 des Bremskreises I (sowie durch die Hauptbremsleitung 15 des Bremskreises II) und die Leitungszweige 16 und 17 in den Radbremsen 18 und 19 Bremsdruck aufgebaut. Dabei nehmen die Wegeventile 20, 27, 28, 38 und 39 ihre federbetätigbare Stellung a ein.

Die Pumpe 41 ist bei einer solchen, stabiles Raddrehverhalten zeigenden Bremsung außer Betrieb. Bei einer Verringerung des Radbremsdruckes und bei Beendigung des Bremsvorganges fließt Druckmittel von den Radbremsen 18 und 19 durch die Radbremsleitungen 25 und 26 unter Überwindung der Rückschlagventile 31 und 32 in den Bypass-Leitungen 29 und 30 sowie der Wegeventile 27 und 28 zurück in den Hauptbremszylinder 12.

Stellt das Steuergerät 52 aufgrund des ständig überwachten Raddrehverhaltens fest, daß während einer Bremsung des Fahrzeugs beispielsweise das der Radbremse 18 zugeordnete Rad unzulässig großen Schlupf aufweist, so schaltet es die Wegeventile 20 und 27 in ihre Sperrstellung b und das Wegeventil 38 in seine Durchlaßstellung b. Außerdem setzt das Steuergerät 52 den Antriebsmotor 40 der Rückförderpumpe 41 in Betrieb. Druckmittel kann nun aus der Radbremse 18 durch den Leitungszweig 35 in die Rückförderleitung 37 und in den Auffangspeicher 46 fließen. Aus diesem wird das Druckmittel im Verlauf des Blockierschutzbetriebes von der Pumpe 41 zurück in den Hauptbremszylinder 12 gefördert.

Bei ausreichendem Druckabbau in der Radbremse 18 schaltet das Steuergerät 52 das Wegeventil 38 in seine Sperrstellung a, während die Wegeventil 20 und 27 in ihrer Sperrstellung b verbleiben. Der Bremsdruck in der Radbremse 18 wird daher konstantgehalten, da in Verbindung mit den Rückschlagventilen 21 und 31 Druckmittel weder in die Radbremse 18 einfließen noch aus dieser abfließen kann.

Bei stabilisiertem Drehverhalten des der Radbremse 18 zugeordneten Fahzeugrades schaltet das Steuergerät 52 das Wegeventil 27 in seine Durchlaßstellung a; die Wegeventile 20 und 38 verbleiben dagegen in ihrer Sperrstellung. Druckmittel kann nun aufgrund des vom Fahrer erzeugten Bremsdruckes vom Hauptbremszylinder 12 durch die Radbremsleitung 25 zur Radbremse 18 fließen und dort den Bremsdruck erhöhen. Aufgrund der Drosselwirkung des Wegeventils 27 in der Durchlaßstellung a erfolgt dieser Druckanstieg in der Radbremse 18 gegenüber dem bei einer Bremsung ohne Blockierschutzbetrieb erzeugten Druckanstieg wesentlich langsamer. Es tritt daher eine relativ geringe Geräuschentwicklung in der Bremsanlage 10 durch Bremsdruckstöße und Druckschwingungen auf. Da Phasen des Druckabbaus, des Druckhaltens und des Druckaufbaus während des Blockierschutzbetriebes in sehr kurzen Zeitspannen aufeinanderfolgen, ist hierdurch eine Komfortverbesserung beim Bremsen des Fahrzeugs erzielt.

Bei stabilisiertem Raddrehverhalten ohne die Gefahr des Blockierens eines der Fahrzeugräder schaltet das Steuergerät 52 das Wegeventil 20 in seine Durchlaßstellung a um, in welcher der Bremsdruckverlauf in den Radbremsen 18 und 19 des Bremskreises I sowie des Bremskreises II dem Fahrerwunsch folgen kann.

Das in Figur 2 dargestellte Schema eines zweiten Ausführungsbeispieles einer hydraulischen Bremsanlage 10' unterscheidet sich vom ersten Ausführungsbeispiel nach Figur 1 im wesentlichen dadurch, daß anstelle des elektromagnetisch betätigbaren Wegeventils 20 in der Hauptbremsleitung 14 in dieser ein hydraulisch betätigbares erstes 2/2-Wegeventil 20' angeordnet ist. Das Wegeventil 20' ist mit einer ersten Steuerleitung 60 zum Schalten der Durchlaßstellung a an den zum Hauptbremszylinder 12 führenden Teil der Hauptbremsleitung 14 angeschlossen. Eine zweite Steuerleitung 61 zum Schalten der Sperrstellung b des Wegeventils 20' steht druckseitig der Rückförderpumpe 41 mit der Rückförderleitung 37 in Verbindung. Außerdem ist das Wegeventil 20' federbetätigt in seine Sperrstellung b rückstellbar. Außerdem ist in die Rückförderleitung 37 zwischen dem Anschluß der zweiten Steuerleitung 61 an diese und dem Hauptbremszylinder 12 ein weiteres Rückschlagventil 62 mit erhöhtem Öffnungsdruck eingefügt. Diese im Bremskreis I enthaltene Ausgestaltung kann auch im Bremskreis II verwirklicht sein.

Die Funktionsweise dieser Bremsanlage 10' ist folgende:
Bei einer Bremsung des Fahrzeugs wirkt der in der Hauptbremsleitung 14 herrschende Druck über die erste Steuerleitung 60 auf das Wegeventil 20' und schaltet dieses in seine Durchlaßstellung a. Druckaufbau und Druckabbau in den Radbremsen 18 und 19 des Bremskreises I (sowie des Bremskreises II) erfolgen wie beim ersten Ausführungsbeispiel.

Im Blockierschutzbetrieb wird, wie im Zusammenhang mit dem ersten Ausführungsbeispiel erwähnt, der Bremsdruck am blockiergefährdeten Fahrzeugrad abgebaut und die Rückförderpumpe 41 in Betrieb gesetzt. Die Pumpe 41 erzeugt während der gesamten Dauer des Blockierschutzbetriebes aufgrund der Wirkung des Rückschlagventiles 62 in der Rückförderleitung 37 einen gegenüber dem Druck in der Hauptbremsleitung 14 höheren Druck, welcher über die zweite Steuerleitung 61 auf das Wegeventil 20' wirkt und dieses in seine Sperrstellung b schaltet. Dadurch erfolgt die Regelung des Bremsdruckes in der Radbremse des blockiergefährdeten Fahrzeugrades während des Blockierschutzbetriebes in der gleichen Weise wie beim ersten Ausführungsbeispiel der Bremsanlage.

Bei Beendigung des Blockierschutzbetriebes und der Pumpenfunktion wird das Wegeventil 20' aufgrund des Druckes in der Hauptbremsleitung 14 in seine Durchlaßstellung a umgeschaltet. Bei Beendigung eines vom Fahrer ausgelösten Bremsvorganges ohne Blockierschutzbetrieb nimmt das Wegeventil 20' federbetätigt seine Sperrstellung b ein.

**Patentansprüche**

1.  Hydraulische Bremsanlage (10) für Fahrzeuge, insbesondere Kraftfahrzeuge, mit einem Hauptbremszylinder (12) zum Erzeugen von Bremsdruck in den vorzugsweise zwei Radbremsen (18 und 19) wenigstens eines Bremskreises I und mit einer Einrichtung (51) zum Verhindern des Blockierens der dem Bremskreis I zugeordneten Fahrzeugräder beim Bremsen, welche eine Drucksteuerventilanordnung (50) für Druckabbau, Druckhalten und Druckaufbau in den Radbremsen (18, 19) beim Blockierschutzbetrieb aufweist mit einem ersten 2/2-Wegeventil (20) in einer den Hauptbremszylinder (12) mit einer Radbremse (z. B. 18) verbindenden Hauptbremsleitung (14) und mit einem zweiten 2/2-Wegeventil (27) mit Drosselwirkung in einer parallel zur Hauptbremsleitung (14) verlaufenden Radbremsleitung (25), gekennzeichnet durch die folgenden Merkmale:
    -   zu den beiden den zwei Radbremsen (18, 19) des Bremskreises (I) zugeordneten Radbremsleitungen (25, 26) liegt lediglich eine Hauptbremsleitung (14) parallel,
    -   die Hauptbremsleitung (14) ist zwischen dem ersten 2/2-Wegeventil (20) und den Radbremsen (18, 19) verzweigt und mit je einem Leitungszweig (16; 17) zwischen dem zweiten 2/2-Wegeventil (27; 28) und der Radbremse (18; 19) an die jeweilige Radbremsleitung (25, 26) angeschlossen,
    -   in jedem Leitungszweig (16; 17) der Hauptbremsleitung (14) liegt ein den Druckmittelrückfluß durch die Hauptbremsleitung (14) zurück zum Hauptbremszylinder (12) unterbindendes Rückschlagventil (21; 22).

2.  Bremsanlage nach Anspruch 1, mit einem aufgrund des Raddrehverhaltens der Fahrzeugräder im Blockierschutzbetieb die Wegeventile (20, 27, 28, 38, 39) schaltenden Steuergerät (52) der Einrichtung (51), dadurch gekennzeichnet, daß das erste 2/2-Wegeventil (20) elektromagnetisch betätigbar und wenigstens während der Phase des Druckaufbaues vom Steuergerät (52) in seine Sperrstellung (b) schaltbar ist.

3.  Bremsanlage nach Anspruch 1, mit einer im Blockierschutzbetrieb Druckmittel aus wenigstens einer Radbremse (z. B. 18) zum Hauptbremszylinder (12) fördernden, in einer Rückförderleitung (37) angeordneten Pumpe (41), dadurch gekennzeichnet, daß das erste 2/2-Wegeventil (20') hydraulisch betätigbar und mit einer ersten Steuerleitung (60) zum Schalten der Durchlaßstellung (a) an den zum Hauptbremszylinder (12) führenden Teil der Hauptbremsleitung (14) und mit einer zweiten Steuerleitung (61) zum Schalten der Sperrstellung (b) druckseitig der Pumpe (41) an die Rückförderleitung (37) angeschlossen ist.

4. Bremsanlage nach Anspruch 3, dadurch gekennzeichnet, daß in die Rückförderleitung (37) zwischen dem Anschluß der zweiten Steuerleitung (61) an diese und dem Hauptbremszylinder (12) ein Rückschlagventil (62) mit erhöhtem Öffnungsdruck eingefügt ist.

# FIG.1

# FIG.2

**Europäisches Patentamt**

## EUROPÄISCHER RECHERCHENBERICHT

Nummer der Anmeldung

## EP 90 12 4334

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 924 565   (TELDIX)<br>* Seite 7, letzter Absatz - Seite 9, Absatz 1; Figur 4 *<br>– – – | 1,2 | B 60 T<br>8/50<br>B 60 T 8/42 |
| A | EP-A-0 156 323   (NIPPONDENSO)<br>* Seite 11, Zeile 3 - Seite 14, Zeile 22; Figur 2 *<br>– – – | 1,2 | |
| A | DE-A-3 427 802   (TOYOTA)<br>* Seite 21, Zeile 22 - Seite 26, Zeile 29; Figur 3 *<br>– – – | 1,2 | |
| A | GB-A-2 185 299   (ALFRED TEVES)<br>* Zusammenfassung; Figuren 1, 3 *<br>– – – | 1-3 | |
| A | DE-A-2 352 284   (TELDIX)<br>* Seite 4, letzter Absatz - Seite 6, letzter Absatz; Figuren 1, 2 *<br>– – – | 1-3 | |
| A | GB-A-2 186 042   (ALFRED TEVES)<br>* Zusammenfassung; Figur *<br>– – – | 1 | |
| A | DE-A-3 505 410   (ALFRED TEVES)<br>* Seite 11, Absatz 2 - Seite 13, Absatz 1; Figur 1 *<br>– – – – – | 3,4 | |

RECHERCHIERTE SACHGEBIETE (Int. Cl.5)

B 60 T

Der vorliegende Recherchenbericht wurde für alle Patentansprüche erstellt

| Recherchenort | Abschlußdatum der Recherche | Prüfer |
|---|---|---|
| Den Haag | 03 April 91 | MEIJS P.C.J. |